# EUROPEAN PATENT SPECIFICATION

(11) **EP 0 435 234 B1**
(45) Date of publication and mention of the grant of the patent: **17.07.1996**
(21) Application number: 90125359.1
(22) Date of filing: 22.12.1990
(51) Int. Cl.: B29C 51/42, B29B 13/02

(54) **Process for thermoforming thermoplastic resin sheet and apparatus therefor**
Verfahren und Vorrichtung zum Warmformen einer thermoplastischen Kunstharzfolie
Procédé et dispositif pour le thermoformage d'une feuille en résine thermoplastique

(30) Priority: 28.12.1989 JP 342392/89
(43) Date of publication of application: 03.07.1991
(73) Proprietor: IDEMITSU PETROCHEMICAL CO., LTD., Minato-ku, Tokyo (JP)
(72) Inventor: Fujii, Atsushi, c/o Idemitsu Petrochem. Co. Ltd., Himeji-shi, Hyogo-ken (JP)
(74) Representative: Türk, Gille, Hrabal, Leifert

(56) References cited:
- EP-A- 0 055 082
- DE-A- 2 600 582
- DE-A- 3 334 670
- US-A- 2 900 665
- US-A- 3 746 497

## Description

The present invention relates to a process for thermoforming a thermoplastic resin sheet and an apparatus therefor, and particlularly it relates to a process for effectively preparing a variety of formed articles such as a container or the like by heating a thermoplastic resin sheet to thermoform a formed part and a production apparatus thereof.

There have previously been produced formed articles such as containers having a variety of shapes by heating a thermoplastic resin sheet such as an olefinic resin sheet and then thermoforming a formed part with a forming die. As the means for heating the thermoplastic resin sheet in the apparatus for thermoforming, there are known an indirect heating method of heating the sheet by keeping it out of contact with a heating source (Japanese Utility Model Laid-Open Publication No. 134218/1980) and a direct method for heating the sheet by directly placing it in contact with a heating source such as a heating plate or the like (Japanese Utility Model Laid-Open Publication Nos. 99765/1976 and 35962/1978, Japanese Utility Model Publication No. 21399/1988 etc.).

However, according to the aforementioned heating method, corrugation is caused due to the thermal expansion of the sheet during the former half of the heating step which inhibits uniform heating of the sheet, and the drawdown following corrugation is also large. Thus, a special thermoplastic resin sheet having extremely small values of corrugation and drawdown must be used or a sheet having a small width must be used for performing a good forming.

On the other hand, the direct heating method at a heating temperature in the vicinity of and below the sheet melting point often causes wrinkle due to the thermal expansion or drawdown of the sheet or transfer of the heating plate impression, which leads to an inferior appearance of the formed product. Although heating at a temperature below the aforementioned heating temperature causes no wrinkle, impression transfer to, or fusing of the sheet, defective formings are often produced and the heat resistance of the formed product obtained is insufficient unless forming is conducted at an extremely high pressure. Moreover, heating at a temperature higher than the melting point of the sheet causes wrinkle, fusing or impression transfer, and thus special sheets must be used. However, such sheets were successful in the prevention of wrinkle or fusing, but they could not avoid diminishing the gloss of the surface.

DE-A-3.334.670 discloses a process for thermoforming a thermoplastic resin sheet comprising one heating step. The part of the thermoplastic resin sheet to be formed is heated to a temperature which is above the melting point of the resin sheet, while the temperature of the cutting-line-zone, i.e. the neighboring portion of the part to be formed, is kept at a temperature below the melting point of the resin sheet. For the purpose of providing a temperature difference, the cutting-line-zone is shielded from the heating device.

A process for producing a formed article by heating a thermoplastic resin sheet and then thermoforming the part to be formed is disclosed in DE-A-2 600 582. According to the known method, the thermoplastic resin sheet is heated in a first zone by means of contact heating plates and intermediate pieces which are arranged on the heating plates and which correspond to the part of the resin sheet to be formed. Therefore the resin sheet is heated merely at the places which are subjected to forming. The sheet is heated to a temperature below the molding range. After the resin sheet has passed the first heating zone the sheet reaches a second heating zone. In the second heating zone the part of the sheet to be formed is heated to the molding temperature of the sheet by keeping it out of contact with the heating source. It is a drawback of the known process that defective articles having a non-uniform wall thickness are often produced.

It is the object of the present invention to provide a process for producing a formed article with a uniform wall thickness and an exellent drawdown with high efficiency and to provide a thermoforming apparatus for producing a formed article with an uniform wall thickness and an exellent drawdown.

This problem is solved, according to the invention, with the features of claim 1 and 8 respectively.

As a result, the present inventor has found that a formed article with excellent appearance and physical properties can be efficiently produced even from crystalline resins such as polyolefins having a narrow temperature range in which forming can be performed, for example, polyethylene, polypropylene, polystyrene or the like by conducting pressure forming of a sheet having been heated under a specific condition. The present invention has thus been accomplished on the basis of such finding.

That is, the present invention provides a process for producing a formed article by heating a thermoplastic resin sheet and then thermoforming a part to be formed, wherein the part to be formed is heated by placing in contact with a heating plate while at least some non-formed part of the thermoplastic resin sheet is not heated by placing in contact with a heating plate, and then said part to be formed and at least a part of said non-formed part are heated together by placing them in a non-contact state with a heating means. The present invention also provides a thermoforming apparatus for producing a formed article by heating a thermoplastic resin sheet with a heating device and then thermoforming a part to be formed with a forming die, wherein the heating device is provided with a direct heating part having a heating plate which is directly contacted with the part to be formed of the thermoplastic resin sheet and a non-contact heating part which is provided between the direct heating part and the forming die and works for heating the entire thermoplastic resin sheet in a non-contact state.

### BRIEF DESCRIPTION OF THE DRAWINGS

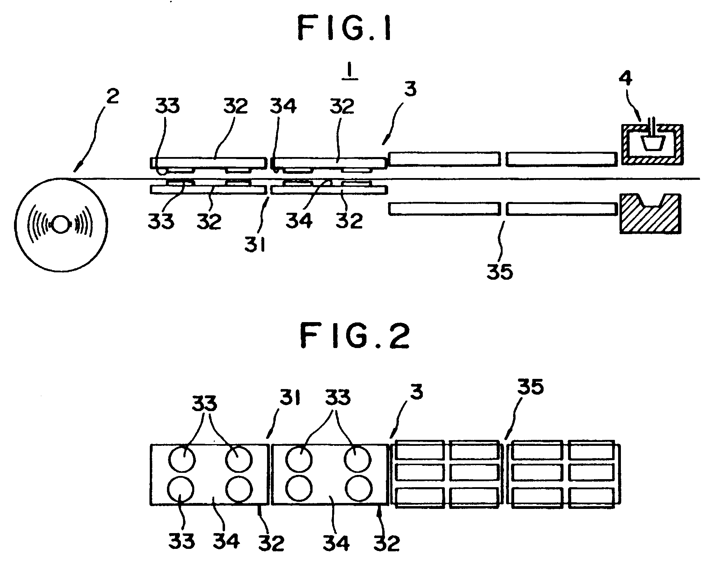

Fig. 1 is a front view of a thermoforming apparatus, and Fig. 2 is a plane view illustrating the lower half of the heating apparatus.
- 1:: thermoforming apparatus,
- 2:: sheet feeding part,
- 3:: heating device,
- 31:: direct heating part,
- 32:: heating plate,
- 33:: heating face,
- 34:: non-contact face,
- 35:: indirect heating part,
- 4:: forming die

### DESCRIPTION OF THE PREFERRED EMBODIMENTS

As described above, according to the present invention, the part to be formed of the thermoplastic sheet is first heated preferably by directly heating both sides in contact with the heating plate, then indirectly heating the entire sheet and forming the sheet thus heated with the forming die. Thus, it will be possible to efficiently thermoform a variety of thermoplastic resins, crystalline resins, laminated or coextruded films thereof such as polyolefins, for example, polyethylene, polypropylene, polystyrene or the like.

The present invention is explained in more detail with reference to an example of the apparatus for thermoforming a thermoplastic resin sheet illustrated in the drawings.

Fig. 1 is a front view of a thermoforming apparatus and Fig. 2 is a plane view illustrating the lower half of the heating apparatus.

The thermoforming apparatus 1 is composed of a sheet feeding part 2, a heating device 3 and a forming die 4, and the heating device 3 is constituted of a direct heating part 31 at the first half stage and an indirect heating part 35 at the latter stage.

The aforementioned direct heating part 31 is for heating the part to be formed of the thermoplastic resin sheet by contacting it with the heating plates and is provided with a pair of upper and lower heating plates 32 which travel up and down along with the conveyance of the sheet and are provided with the heating faces 33 for directly heating the part to be formed locally so that they protrude from the non-contact faces corresponding to the non-formed parts of the sheet. The heating faces 33 can be fabricated with a metal which is conventionally used for such heating faces, and a teflon coating or a teflon cloth can be applied to the surface. Furthermore, from an effective heating viewpoint, the sheet is heated preferably by heat transfer to the sheet in-between the heating faces 33 on the pair of the upper and lower heating plates 32. If the sheet can be satisfactorily heated in a tight contact with the heating faces 33, it is sufficient that the heating plates 32 are provided on either one of the upper or lower sides.

While the temperature of the heating face 33 can be appropriately controlled depending on the materials or thickness of the sheet, the desired heat resistance or gloss of a formed product, the upper limit of the temperature is generally determined so that the fusing of the sheet does not occur. For example, the temperature of the heating face is in the range of 80 to 140°C for sheets of conventional polypropylenes. The heating plate 32 must have a shape consisting of a contact part which can satisfactorily heat the part of the sheet to be formed and a non-contact part which will not contact with the non-formed part, and the heating plate may be contacted a plurality of times with the part to be formed along with the conveyance of the sheet. As the direct heating device, there can be used a direct heating device which is disclosed in Japanese Utility Model Publication No. 21399/ 1988.

The indirect heating part 35 in the latter stage of the heating device can be fabricated in a similar manner as conventional heating devices which heat the entire sheet with heat sources such as a far-infrared heater or an infrared heater having a short or medium wave length. The heating temperature is set up depending on the materials or thickness of the sheet or the desired physical properties of a formed product, and the upper limit of the temperature is determined by the presence of the drawdown. For example, the heating temperature is in the range of 150 to 180°C for sheets of conventional polypropylenes. When emphasis is put on transparency, it is preferable in the range of the melting point or less. It is preferable in the range of 180°C or less for a polypropylene sheet having a nucleating agent added thereto. Heating sources may be arranged on the both sides or on either one side provided that the sheet can be sufficiently heated.

Thus, the direct heating of the part to be formed of the sheet at the first half stage and the indirect heating of the entire sheet at the latter stage permit the sheet to be heated to an appropriate temperature required for pressure forming in a forming die 4 while suppressing the generation of the drawdown, wrinkle, fusing or impression transfer. At the first half stage, no wrinkle or fusing of sheet are found since the heating at this stage is only a preliminary heating, that is, heating at a low temperature is satisfactory due to heating at the latter stage. At the latter stage, no wrinkle is found because of the absence or only a small amount of the drawdown, and no impression transfer from the heating plate will be caused because the heating is in a non-contact state. Only a small amount of drawdown is believed to take place since the relationship of heating at the first half stage is maintained also at the latter stage, and thus the sheet is maintained by the non-contact region at the first half stage (the region at a temperature lower than the part to be formed).

As the forming die 4, any of various forming dies which have been conventionally used for thermoforming thermoplastic resins can be used depending on the shapes of the formed products, and a variety of means such as a plate forming, a roll forming, a vacuum forming, a pressure forming, a plug assist forming, a non-plug assist forming or the like can be employed.

As described above, a variety of formed products such as containers which have an extremely small amount of drawdown and have excellent form reproduction ability, surface gloss, appearance, heat resistance or the like can be produced at a high speed and with a wide sheet, and production at a high efficiency can be performed. Such production requires no special apparatus and can be performed with a simple apparatus. It can be used widely for thermoforming a variety of thermoplastic resin sheets.

In particular, many benefits can be expected from applying the process of the present invention to thermoforming crystalline resins such as polyolefin, for example, polyethylene, polypropylene, polystyrene or the like or laminated or multilayered films thereof.

The process of the present invention is further explained with reference to Examples and Comparative Examples.

### Example 1

As a sheet rollstock, a coextruded sheet comprising polypropylene (PP)/ethylene vinylalcohol (EVOH)/polypropylene (PP)/high density polyethylene (HDPE) and having a thickness of 800 µm (trade name: Idemitsu MAGICTOP Sheet) was used, a dessert container having a diameter of 65 mm and a depth of 25 mm was produced with a thermoforming apparatus 1, as described above, comprising a sheet feeding part 2, a heating device 3 which comprises a direct heating part 31 at the first half stage and an indirect heating part 35 at the latter stage, and a forming die 4. Heating was conducted at 110°C at the heating face of the upper side and at 150°C at the heating face of the lower side of the direct heating part 31 and at an environmental temperature of the heating source of 300°C. Furthermore, as the forming die 4, a plug-assisted pressure forming type was used by pressure for forming of 3 kg/cm² and a forming cycle of 20 shots/min.

The maximum amount of drawdown on thermoforming, form reproduction ability, presence of bridge, gloss or heat resistance of a container obtained were evaluated. The results are shown in Table 1 together with the heating conditions.

### Examples 2 to 4

Containers were produced in the same manner as Example 1 except that a monolayer sheet of polypropylene having a thickness of 600 µm (trade name: Idemitsu PURELAY Sheet) was used as a sheeting and heating was conducted at the temperatures of the heating faces in the upper and lower sides and at the environmental temperatures of the heating source. The results of evaluation are shown in Table 1.

### Example 5

A container was produced in the same manner as Example 1 except that heating was conducted only from the upper side at the indirect heating part 35 and at the environmental temperature at the heating source of 350°C. The results of evaluation are shown in Table 1.

### Comparative Examples 1 to 4

Containers were produced in the same manner as Example 2 except that the sheet was heated under the conditions described in Table 1. The results of evaluation are shown in Table 1.

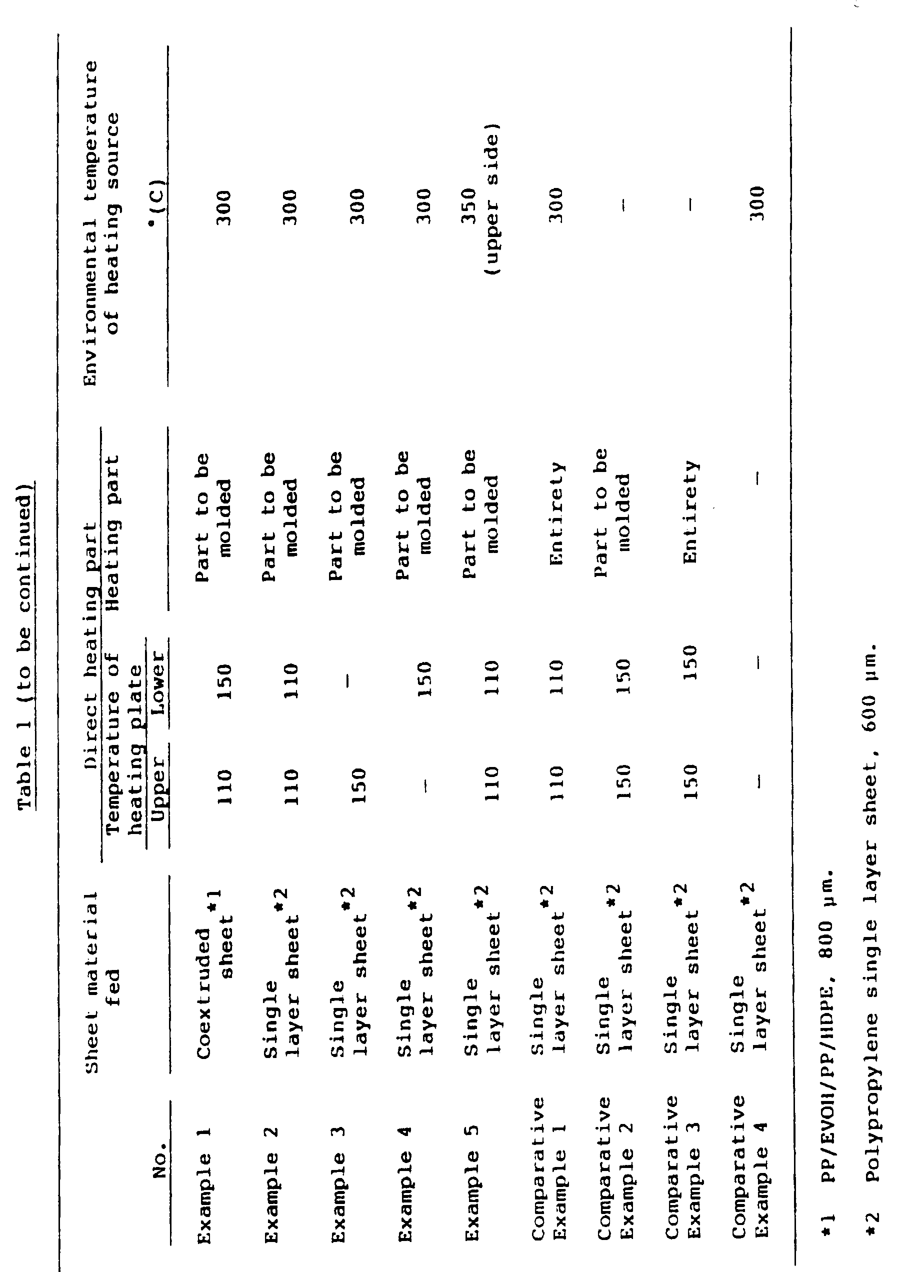

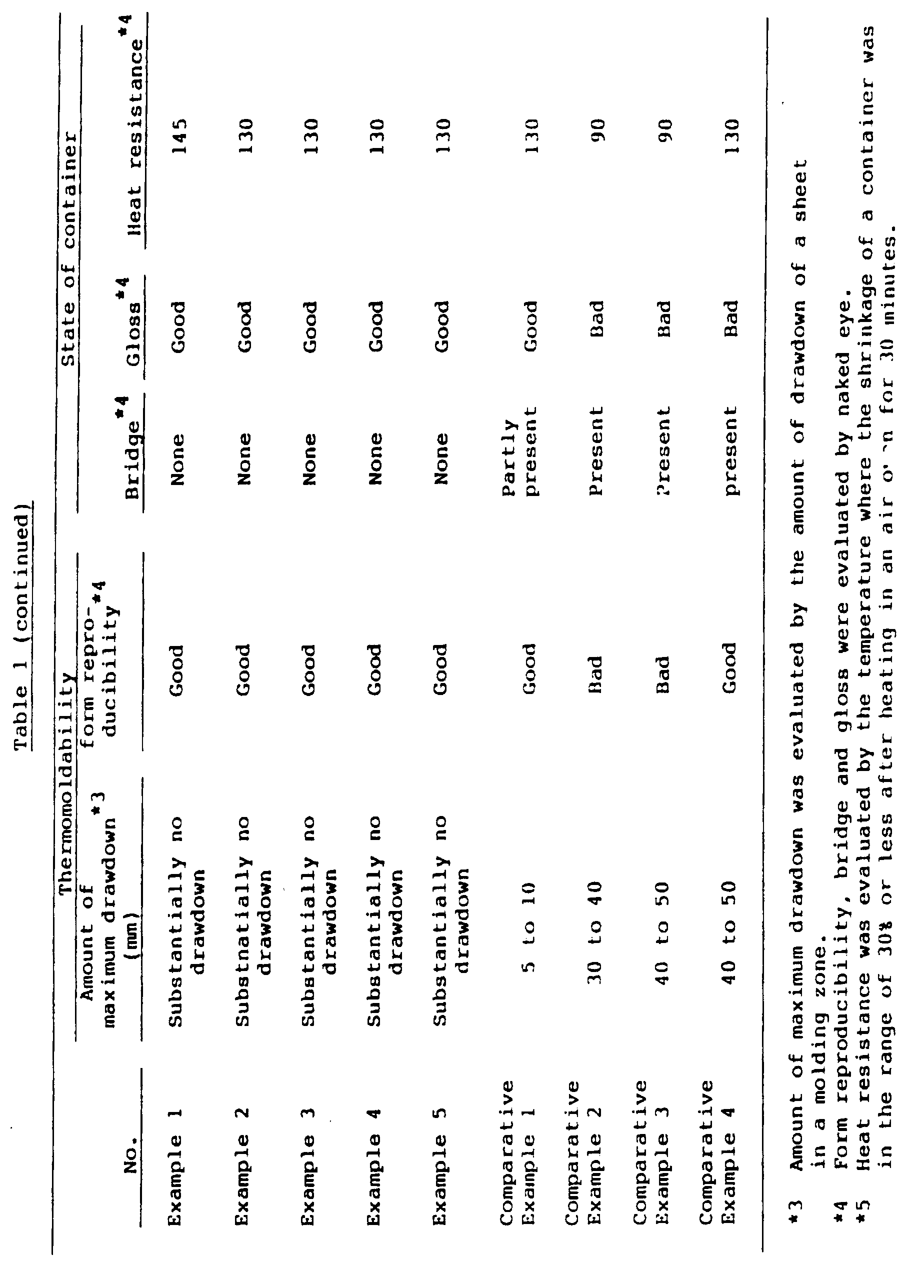

## Claims

1. A process for producing a formed article by heating a thermoplastic resin sheet and then thermoforming a part to be formed, comprising the steps of heating said part of the thermoplastic resin sheet to be formed and at least a part of non-formed part of the resin sheet by placing them in contact with a heating plate (32) while at least a part of non-formed part of the thermoplastic resin sheet is not heated by not placing it in contact with said heating plate (32), and then heating said part to be formed and at least a part of said non-formed part by placing them in a non-contact state with a heating means (35).

2. A process for thermoforming a thermoplastic resin sheet according to claim 1, wherein the both sides of the part to be formed of the thermoplastic resin sheet are heated by contacting with a heating plate (32).

3. A process for thermoforming a thermoplastic resin sheet according to claim 1, wherein one side of the part to be formed of the thermoplastic resin sheet is heated by contacting with a heating plate (32).

4. A process for thermoforming a thermoplastic resin sheet according to one of claims 1 to 3, wherein said thermoplastic resin sheet is a laminated or coextruded sheet.

5. A process for thermoforming a thermoplastic resin sheet according to claim 4, wherein said laminated or coextruded sheet comprises PP/EVOH/PP/HDPE.

6. A process for thermoforming a thermoplastic resin sheet according to one of claims 1 to 5, wherein said thermoplastic resin sheet is a polypropylene sheet.

7. A process for thermoforming a thermoplastic resin sheet according to one of claims 1 to 6, wherein said part of said thermoplastic resin sheet to be formed and the neighboring portion of said part within a range of from at least 1 mm to 10 mm from said part is heated by placing said part and said neighboring portion in contact with said heating plates (32) while the remaining portion of the non-formed part of said resin sheet is not heated by not placing said sheet in contact with said heating plates (32), wherein said part to be formed, said neighboring portion and said remaining portion of said resin sheet are heated by placing them in said non-contact state with said heating means (35), and wherein said resin sheet is conveyed to a means (4) for thermoforming said part of said resin sheet to be formed.

8. A thermoforming apparatus for producing a formed article by heating a thermoplastic resin sheet with a heating device and then thermoforming a part to be formed with a forming die, comprising a heating device with a direct heating part (31) having a heating plate (32) which is directly contacted with the part of the thermoplastic resin sheet to be formed and at least a part of non-formed part of said sheet and comprising a non-contact heating part (35) which is provided between the direct heating part (31) and the forming die (4) and which works for heating the entire thermoplastic resin sheet in a non-contact state.

9. A thermoforming apparatus for producing a formed article according to claim 8, wherein heating plates (32) are arranged at both sides of the thermoplastic resin sheet.

10. A thermoforming apparatus for producing a formed article according to claim 8, wherein heating plates (32) are arranged at one side of the thermoplastic resin sheet.

11. A thermoforming apparatus for producing a formed article according to one of claims 8 to 10, wherein the heating face (33) of said heating plate (32) is coated with teflon.

12. A thermoforming apparatus for producing a formed article for producing a formed article according to one of claims 8 to 10, wherein a teflon cloth is stuck on the heating face (33) of said heating plate (32).

## Patentansprüche

1. Verfahren für die Herstellung eines Formlings durch Erwärmung einer thermoplastischen Kunstharzfolie und anschließender Warmformung eines zu formenden Teils, welches die Schritte der Erwärmung dieses Teils der zu formenden thermoplastischen Kunstharzfolie und mindestens eines Teils des nicht geformten Teils der Kunstharzfolie umfaßt, indem sie mit einer Heizplatte (32) in Berührung gebracht werden, während mindestens ein Teil des nicht geformten Teils der thermoplastischen Kunstharzfolie dadurch nicht erwärmt wird, daß sie nicht mit dieser Heizplatte (32) in Berührung gebracht wird, und dann das zu formende Teil und mindestens einen Teil des nicht zu formenden Teils erwärmt wird, indem sie in berührungfreiem Zustand mit einer Heizvorrichtung (35) placiert werden.

2. Verfahren für die Warmformung einer thermoplastischen Kunstharzfolie nach Anspruch 1, bei dem beide Seiten des zu formenden Teils der thermoplastischen Kunstharzfolie durch Kontaktierung mit einer Heizplatte (32) erwärmt werden.

3. Verfahren für die Warmformung einer thermoplastischen Kunstharzfolie nach Anspruch 1, bei dem eine Seite des zu formenden Teils der thermoplastischen Kunstharzfolie durch Kontaktierung mit einer Heizplatte (32) erwärmt wird.

4. Verfahren für die Warmformung einer thermoplastischen Kunstharzfolie nach einem der Ansprüche 1 bis 3, bei dem die verwendete thermoplastische Kunstharzfolie eine laminierte oder koextrudierte Kunstharzfolie ist.

5. Verfahren für die Warmformung einer thermoplastischen Kunstharzfolie nach Anspruch 4, bei dem die verwendete laminierte oder koextrudierte Kunstharzfolie PP/EVOH/PP/HDPE enthält.

6. Verfahren für die Warmformung einer thermoplastischen Kunstharzfolie nach einem der Ansprüche 1 bis 5, bei dem die verwendete thermoplastische Kunstharzfolie eine Kunstharzfolie aus Polypropylen ist.

7. Verfahren für die Warmformung einer thermoplastischen Kunstharzfolie nach einem der Ansprüche 1 bis 6, bei dem dieser zu formende Teil der thermoplastischen Kunstharzfolie und der benachbarte Teil dieses Teils in einem Abstand von mindestens 1 mm bis 10 mm dadurch erwärmt wird, daß dieser Teil sowie der benachbarte Bereich mit den Heizplatten (32) in Berührung gebracht wird, während der restliche Teil des nicht geformten Teils dieser Kunstharzfolie dadurch nicht erwärmt wird, daß diese Kunstharzfolie nicht in Berührung mit diesen Heizplatten (32) gebracht wird, während der zu formende Teil, sowie der benachbarte Bereich und der restliche Teil dieser Kunstharzfolie dadurch erwärmt werden, daß sie in diesem berührungfreien Zustand mit diesen Heizvorrichtungen (35) in Berührung gebracht werden, wobei diese Kunstharzfolie an ein Mittel (4) für die Warmformung dieses Teils der zu formenden Kunstharzfolie geführt wird.

8. Warmformvorrichtung für die Herstellung eines Formlings durch Erwärmung einer thermoplastischen Kunstharzfolie mit Hilfe einer Heizvorrichtung und anschließender Warmformung eines zu formenden Teils mit Hilfe eines Umformgesenkes, die ein Heizgerät mit einem direkten Heizteil (31) mit einer Heizplatte (32) enthält, welche direkt mit dem zu formenden Teil und mit mindestens einem Teil des nicht geformten Teils dieser Kunstharzfolie in Berührung gebracht wird, sowie einen bBerührungfreien Heizteil (35) aufweist, welcher zwischen diesem direkten Heizteil (31) und dem Umformgesenk (4) vorgesehen ist und dazu dient, die gesamte thermoplastische Kunstharzfolie in einem berührungfreiem Zustand zu erwärmen.

9. Warmformvorrichtung für die Herstellung eines Formlings nach Anspruch 8, bei der die Heizplatten (32) an beiden Seiten der thermoplastischen Kunstharzfolie angeordnet sind.

10. Warmformvorrichtung für die Herstellung eines Formlings nach Anspruch 8, bei der die Heizplatten (32) an einer der Seiten der thermoplastischen Kunstharzfolie angeordnet sind.

11. Warmformvorrichtung für die Herstellung eines Formlings nach einem der Ansprüche 8 bis 10, bei der die Heizfläche (33) der Heizplatte (32) mit Teflon beschichtet ist.

12. Warmformvorrichtung für die Herstellung eines Formlings nach einem der Ansprüche 8 bis 10, bei der ein Teflongewebe an der Heizfläche (33) der Heizplatte (32) verklebt ist.

## Revendications

1. Procédé pour fabriquer un article mis en forme en chauffant une feuille en résine thermoplastique puis en thermoformant la partie à former, comprenant les étapes consistant à chauffer ladite partie de la feuille en résine thermoplastique à former et au moins une partie de la partie non formée de la feuille en résine, en les mettant en contact avec une plaque chauffante (32) tandis qu'au moins une partie de la partie non formée de la feuille en résine thermoplastique n'est pas chauffée en n'étant pas mise en contact avec ladite plaque chauffante (32), puis en chauffant ladite partie à former et au moins une partie de ladite partie non formée en les exposant sans contact à des moyens de chauffage (35).

2. Procédé pour le thermoformage d'une feuille en résine thermoplastique selon la revendication 1, dans lequel les deux côtés de la partie à former de la feuille en résine thermoplastique sont chauffés par mise en contact avec une plaque chauffante (32).

3. Procédé pour le thermoformage d'une feuille en résine thermoplastique selon la revendication 1, dans lequel un côté de la partie à former de la feuille en résine thermoplastique est chauffé par mise en contact avec une plaque chauffante (32).

4. Procédé pour le thermoformage d'une feuille en résine thermoplastique selon l'une quelconque des revendications 1 à 3, dans lequel ladite feuille en résine thermoplastique est une feuille stratifiée ou co-extrudée.

5. Procédé pour le thermoformage d'une feuille en résine thermoplastique selon la revendication 4, dans lequel ladite feuille stratifiée ou co-extrudée se compose de PP/EVOH/PP/HDPE.

6. Procédé pour le thermoformage d'une feuille en résine thermoplastique selon l'une quelconque des revendications 1 à 5, dans lequel ladite feuille en résine thermoplastique est une feuille de polypropylène.

7. Procédé pour le thermoformage d'une feuille en résine thermoplastique selon l'une quelconque des revendications 1 à 6, dans lequel ladite partie de ladite feuille en résine thermoplastique à former et la portion avoisinante de ladite partie, dans un domaine d'au moins 1 mm jusqu'à 10 mm de ladite partie sont chauffées en mettant ladite partie et ladite portion avoisinante en contact avec lesdites plaques chauffantes (32), tandis que la portion restante de la partie non formée de ladite feuille en résine n'est pas chauffée en ne mettant pas ladite feuille en contact avec lesdites plaques chauffantes (32), dans lequel ladite partie à former, ladite portion avoisinante et ladite portion restante de ladite feuille en résine sont chauffées en les exposant dans ledit état sans contact avec lesdits moyens de chauffage (35) et dans lequel ladite feuille en résine est acheminée vers des moyens (4) pour thermoformer ladite partie de ladite feuille en résine à former.

8. Dispositif de thermoformage pour produire un article mis en forme en chauffant une feuille en résine thermoplastique à l'aide d'un dispositif de chauffage puis en thermoformant une partie à former à l'aide d'un outil de formage, se composant d'un dispositif de chauffage comportant une section de chauffage direct (31) munie d'une plaque chauffante (32) qui est directement mise en contact avec la partie de la feuille en résine thermoplastique à former et au moins une partie de la partie non formée de ladite feuille et comportant une section de chauffage sans contact (35) qui est disposée entre la section de chauffage direct (31) et l'outil de formage (4) et qui sert à chauffer la feuille en résine thermoplastique dans sa totalité dans un état sans contact.

9. Dispositif de thermoformage pour produire un article mis en forme selon la revendication 8, dans lequel les plaques chauffantes (32) sont disposées de part et d'autre de la feuille en résine thermoplastique.

10. Dispositif de thermoformage pour produire un article mis en forme selon la revendication 8, dans lequel les plaques chauffantes (32) sont disposées sur un côté de la feuille en résine thermoplastique.

11. Dispositif de thermoformage pour produire un article mis en forme selon l'une quelconque des revendications 8 à 10, dans lequel la face de chauffage (33) de ladite plaque chauffante (32) est revêtue de Téflon.

12. Dispositif de thermoformage pour produire un article mis en forme selon l'une quelconque des revendications 8 à 10, dans lequel une toile en Téflon est collée sur la face de chauffage (33) de ladite plaque chauffante (32).
